# EUROPEAN PATENT APPLICATION

(11) **EP 1 530 315 A1**
(43) Date of publication of application: **11.05.2005**
(21) Application number: 04256778.4
(22) Date of filing: 03.11.2004
(51) Int. Cl.: H04L 9/32, H04L 29/06

(54) **System and method for authentication of applications in a non-trusted network environment**

(30) Priority: 05.11.2003 US 517600 P; 12.08.2004 US 917087
(71) Applicant: Openwave Systems Inc., Redwood City, CA 94063 (US)
(72) Inventor: Wager, Garrick, Arvada, CO 80005 (US); Cedervall, Mats, 87160 Harnosand (SE)
(74) Representative: Jackson, Richard Eric

(57) **Abstract**

A system and method for verifying an application's authorization to receive position information comprising receiving a request for position information from the application, determining that the application has not yet been approved to receive the requested position information, sending a challenge key to the device on which the application is running, sending an application key to the application, sending a challenge string to the application, receiving an encrypted hash of the challenge key, application key and challenge string from the application, verifying that the encrypted hash is an expected value, and sending positioning server information to the application.

## Description

### CROSS-REFERENCE TO RELATED APPLICATIONS AND PATENTS

The present application is related to co-pending, and commonly-assigned U.S. Patent Application No. 60/517,600, Attorney Docket No. 51410/V036.0 filed on November 5, 2003, entitled "SYSTEM AND METHOD FOR AUTHENTICATION OF APPLICATIONS IN A NON-TRUSTED NETWORK ENVIRONMENT."

### TECHNICAL FIELD

The present invention relates generally to location requests from applications on user equipment and, more particularly, to authentication of location requests to ensure that users have approved the release of position information.

### BACKGROUND

As location-based services become more popular for mobile users, privacy issues become a concern for users who do not want their location information to be freely available. Users may not want location information to be available to any requesting application. Instead, users may desire to individually approve the applications that are authorized to obtain position information for the user. However, existing applications assume that the user is operating in a trusted network and, therefore, do not include authentication capabilities.

### SUMMARY OF THE INVENTION

The present invention is directed to a system and method that withholds position information from a requesting application until the user indicates that the application is authorized to receive the position information.

According to a first embodiment, a computer program product having a computer readable medium having computer program logic recorded thereon for providing services to a wireless device, comprises code for receiving a request for location information from an application adapted to provide location-aware services to the wireless device, code for verifying that a user has given permission to the application to request the location information, and code for authorizing the application to receive the location information.

According to another embodiment, a computer program product having a computer readable medium having computer program logic recorded thereon for providing services to a wireless device, comprises code for requesting user location information from a network resource, code for prompting a user for permission to request the location information, and code for authorizing an application, operable to provide location-aware services to the wireless device, to receive the location information.

In another embodiment, a method for verifying an application's authorization to receive position information comprises receiving a request for position information from the application, determining that the application has not yet been approved to receive the requested position information, sending a challenge key to the device on which the application is running, sending an application key to the application, sending a challenge string to the application, receiving an encrypted hash of the challenge key, application key and challenge string from the application, verifying that the encrypted hash is an expected value, and sending positioning server information to the application.

In another embodiment, a method for approving an application's request for position information comprises sending a request for position information to a location services manager, receiving notification that the position information request failed, sending an application name and an application identifier to the location services manager, prompting a user to enter a challenge key that was sent by the location services manager, receiving an application key from the location services manager, receiving a challenge string from the location services manager, creating an encrypted hash of the challenge key, application key and challenge string, sending the encrypted hash to the location services manager, and receiving a positioning server address from the location services manager.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 is an example call flow diagram of a process, according to various embodiments of the invention, for authenticating applications in a non-trusted

FIGURE 2 is an example call flow diagram according to an alternative embodiment of the invention for authenticating applications in a non-trusted environment;

FIGURE 3 is an example call flow diagram according to another embodiment of the invention;

FIGURE 4 is a block diagram illustrating an example method, according to various embodiments, that may be performed by a network resource, such as an LCS manager, for authenticating applications; and

FIGURE 5 is a block diagram illustrating an example method, according to various embodiments, that may be performed by an LCS agent or trusted framework, for authenticating applications.

### DETAILED DESCRIPTION

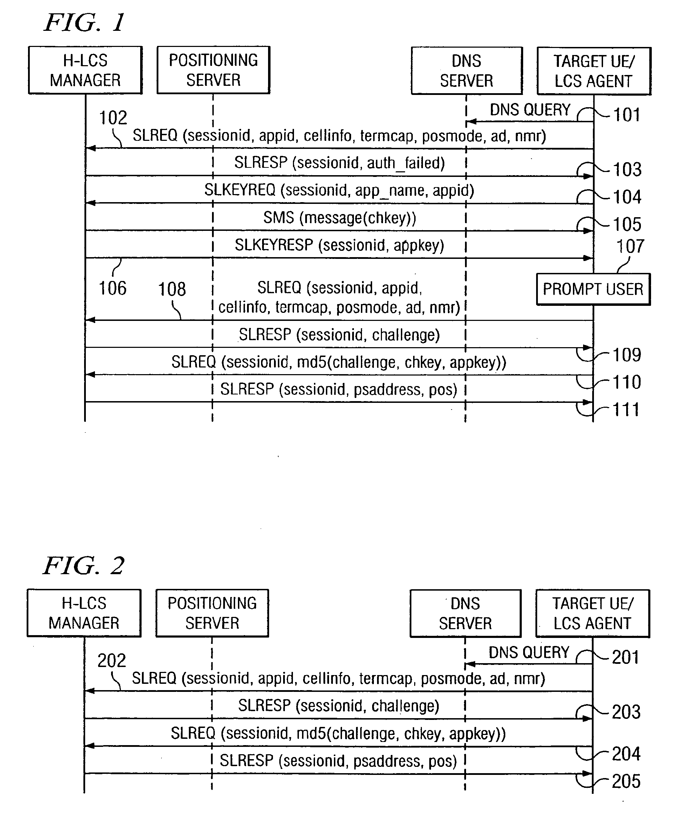

FIGURE 1 is an example call flow diagram of a process, according to various embodiments of the invention, for authenticating applications in a non-trusted environment. The process involves sending a key to the user and prompting the user to enter the key in order to verify that the user has approved the application's use of location information. The key may be sent, for example, via a Short Message Service (SMS) message to the user's mobile device.

The call flow of FIGURE 1 may be associated with the first time an application requests location information. The application may be a location services (LCS) agent running on user equipment (UE) or may be an application that includes an LCS agent. The user equipment may be,any of a variety of wireless devices, including a mobile telephone, PDA, laptop computer, or the like. The LCS agent requires location information to provide a requested service to the user. For example, a "friend finder application" may require location information to compare the user's position to the position of others, such as users on a buddy list, to identify which users are within a certain distance. In another embodiment, a "roadside assistance application" may require location information to request services for a vehicle that suffered a mechanical breakdown.

When the LCS agent determines that it requires location information, it sends DNS query 101 to a DNS Server to obtain the IP address for a servicing LCS Manager. The DNS Server then responds to the request with a message containing the IP address of the servicing LCS Manager. The LCS Manager may, in some embodiments, run on a computer server, such as may be available from a variety of sources, such as HEWLETT-PACKARD® COMPANY or SUN MICROSYSTEMS® The LCS agent initiates the positioning process by sending message 102 to the LCS manager on the network. Message 102 is a start location request (SLREQ) message that includes a session identification (*sesssionid*) that uniquely identifies the related messages in this session. SLREQ message 102 also includes an application identification (*appid*) message that uniquely identifies the application or LCS agent that has requested the location information. Other parameters may be included in SLREQ 102, such as information about a servicing wireless network cell (*cellinfo*); information regarding the capabilities of the user equipment or terminal (*termcap*); and positioning mode information (*posmode*), which may identify a certain level of location accuracy that is required by the application or a desired positioning method, for example. SLREQ message 102 may also include optional information such as assisted data (*ad*) to be used for assisted GPS (AGPS) locating or network measurement report (*nmr*) information.

The LCS manager uses the *appid* parameter to determine whether the application is known and authenticated. For example, the LCS manager may compare the *appid* to a database of known application identifiers or may query another server for authentication of the *appid*. When the LCS manager determines that the *appid* is not authenticated, it returns start location response (SLRESP) message 103 to the LCS agent. SLRESP message 103 includes an authentication failed (*auth_failed*) parameter that notifies the LCS agent that authentication information is required in order to receive location information.

The LCS agent initiates the authentication process by sending start location key request (SLKEYREQ) message 104 to request a key from the LCS manager. The application name (*app_name*) parameter in SLKEYREQ 104 may be a user-readable or friendly name for the application. For example, *app_name* may be "Friend Finder" for a friend-finder application.

In response to SLKEYREQ message 104, the LCS manager sends SMS message 105, which is a text message that includes a challenge key (*chkey*). The text message may inform the user that the challenge key must be entered in order to permit the LCS agent application to receive location information. The *app_name* parameter may be used to create the text message in SMS message 105. For example, the text message may read: "Please enter the challenge code *<chkey>* to allow the *<app_name* (e.g. "Friend Finder")> application to retrieve your position information. Instead of prompting a user to manually enter the challenge key, an alternative embodiment may ask the user to click on an "OK" button in order to enter the key. Once the challenge key is entered by the user, it is not sent directly back to the LCS manager, but rather is provided to the LCS agent, which employs it in message 110, as described further below.

The LCS manager also sends start location key response (SLKEYRESP) message 106 to the LCS agent. SLKEYRESP message 106 includes an application key (*appkey*) parameter. The *appkey* is a code that is assigned by the LCS manager to the LCS agent or application on the user equipment. The application key, in this example, is used only for this application and is associated with the application for all future messages with the LCS manager. However, other embodiments may provide mechanisms for changing the application key or sharing the application key among other applications, depending on the amount of security needed for the particular system.

After the user enters the challenge key in response to SMS-initiated prompt (107), the LCS agent generates a new location request message (SLREQ) 108. The new SLREQ message 108 is similar to earlier SLREQ message 102. However, the LCS manager now recognizes the *appid* parameter and knows that the application may have the required authentication keys (*chkey* and *appkey*). Accordingly, the LCS manager returns SLRESP message 109, which includes a challenge parameter (*challenge*) instead of an authentication failed (*auth_failed*) parameter. The LCS agent responds to SLRESP message 109 by creating a Message Digest 5 (MD5) hash of the *challenge*, *chkey* and *appkey* parameters. The MD5 hash is returned in message 110. The LCS manager decrypts the message, and if the parameters match the stored values for the parameters, the agent is authenticated, and therefore, authorized to receive the location information. The LCS manager responds with SLRESP message 111, which includes a redirect to the positioning server address (*psaddress*) and an optional position parameter (*pos*).

After message 111, the call flow proceeds as normal between the user equipment/LCS agent and the positioning server. The LCS agent contacts the positioning server for the required location information. In one embodiment, the positioning server does not respond to the LCS agent's requests until receiving authorization from the LCS manager.

FIGURE 2 is an example call flow diagram according to an alternative embodiment of the invention for authenticating applications in a non-trusted environment. The call flow in FIGURE 2 illustrates a scenario wherein the LCS agent on the user equipment has already received the authentication keys. For example, FIGURE 2 may illustrate a second location request from the LCS agent of FIGURE 1. Message 201 is a DNS query for the IP address of the LCS manager. The LCS agent initiates the positioning process by sending SLREQ message 202 to the LCS manager. Message 202 includes an application identification (*appid*) parameter that is recognized by the LCS manager. The LCS manager knows that the user equipment may have the previously provided authentication keys (*chkey* and *appkey*). Accordingly, the LCS manager is able to send SLRESP message 203 with the *challenge* parameter and does not have to exchange the intermediate messages 103-108 from the call flow of FIGURE 1.

The LCS agent creates an MD5 hash using the *challenge*, *chkey* and *appkey* parameters and returns it in SLREQ message 204. Upon verifying the MD5 hash, the LCS manager redirects the LCS agent to the positioning server by sending SLRESP message 205 having the positioning server address (*psaddress*). Following message 205, the LCS agent and positioning server communicate using the normal call flow.

In the embodiments described with regard to FIGURES 1 and 2, the agent is part of a larger program, such as friend finder or a roadside assistance program, which provides location-aware service to the wireless device. In those cases, each such program may include its own agent or have an agent associated with it. In other embodiments, two or more applications may share an agent. Whether agents are shared or are unique for each application, such embodiments are within the scope of the invention.

Instead of authenticating and/or authorizing the application itself, in an alternative embodiment, a separate framework may be authenticated and/or authorized to handle all user-equipment-based applications. In such embodiments, the framework may authorize the applications by itself, or it may facilitate the authorization of applications, such as by providing the applications with digital signatures for communication with network resources, such as an LCS manager or a positioning server. In one example, a JAVA or BREW framework is used for the authentication/authorization process of the applications. In such an example, the framework is authenticated/authorized, and then it may handle privacy authentication/authorization for other applications residing on the user equipment. The framework itself may be authorized by any of a variety of methods now known or later developed. Thus, the framework may be trusted by external LCS servers to properly approve user equipment applications to receive location information.

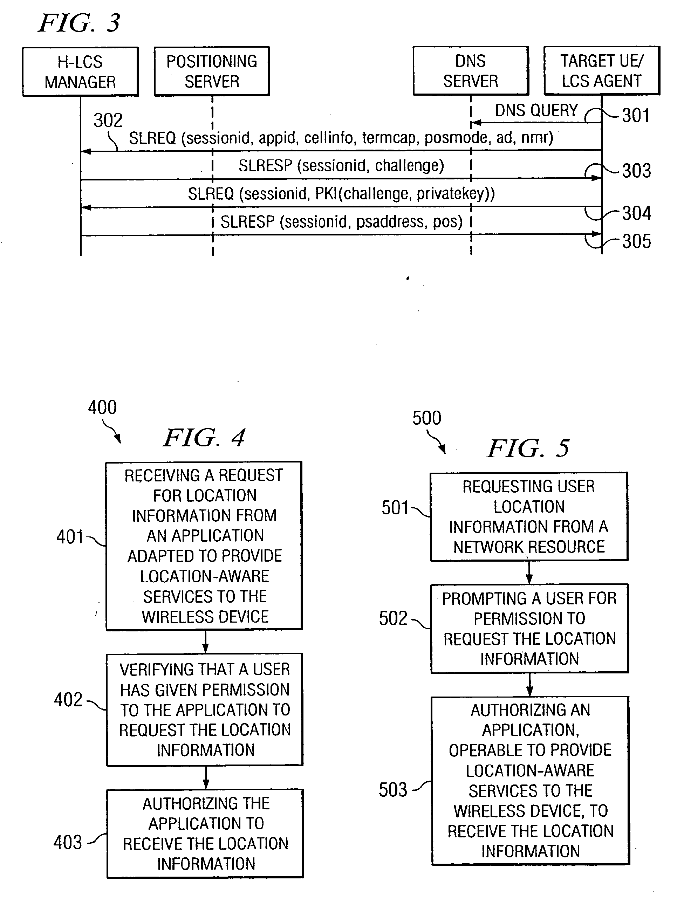

FIGURE 3 is an example call flow diagram according to another embodiment of the invention. The signaling depicted by the call flow, in this embodiment, enables the authorizing of an application in a non-trusted environment by employing a private key from a certificate that is associated with the application. The certificate may be any of a variety of "digital IDs" available from a vendor or other trusted third party, such as VERISIGN®, INC. For the purposes of this embodiment, it may be assumed that the application has been authorized in the user equipment by an independent process, such as a BREW or JAVA download process, and that the certificate is available in the LCS manager for verification and decryption purposes.

The user equipment of FIGURE 3 may include a framework, such as middleware, that is trusted to enforce user privacy, for example, via a pop-up message asking for permission before allowing applications to locate the user. The LCS agent on the user equipment may use a middleware Application Programming Interface (API) to request location information. The middleware prompts the user for permission to collect location information, receives the user's acknowledgement, and then signs the application's location request with its private key to prove that the request is coming from a trusted source. Other applications, such as the LCS manager, can use a corresponding public key for verification of the request.

Message 301 is a DNS query from the LCS agent for the IP address of the serving positioning server. The LCS agent is then redirected to the LCS manager. The LCS agent initiates the positioning process by sending SLREQ message 302 to the LCS manager, wherein message 302 is similar to messages 102 and 202 in the call flow of FIGURES 1 and 2. The LSC manager has the *appid* stored and determines that the LCS agent may have a certificate authentication key (*certkey*). The LCS manager returns *a challenge* string in message 303.

Using the private key (*privatekey*) associated with the certificate for the application, the user equipment generates a PKI (public key infrastructure) encryption of the challenge string. The agent sends this encryption to the LCS manager in message 304 and the LCS manager decrypts the message using the public key to extract the *challenge* string. The LCS manager compares the extracted *challenge* string to the original challenge string to verify the authentication. If the authentication is successful, the application is authorized to access the location information. Accordingly, the LCS manager redirects the LCS agent to the positioning server in message 305. The LCS agent then proceeds to communicate with the positioning server to receive location information.

In an alternative embodiment, the middleware on the user equipment monitors who is using the device. For example, the middleware may detect a Subscriber Identity Module (SIM) change on the user equipment, which indicates that a new user is using the equipment. The new user may not be authorized to retrieve location information or may not want applications to retrieve location information. Accordingly, the middleware may clear any stored keys, such as the *challenge*, *private key, chkey*, or *appkey* parameters, to prevent unauthorized or unauthenticated positioning by user equipment applications.

In other embodiments, the LCS manager may interrogate the network operator's systems to map the IP address of the user equipment to the user equipment's Mobile Subscriber Integrated Service Digital Network (MSISDN) when the LCS manager first authenticates and authorizes an application. The LCS manager may store this information and may verify that the MSISDN is the same for subsequent requests by mapping the current IP address to the MSISDN in later requests.

FIGURE 4 is a block diagram illustrating example method 400, according to various embodiments, that may be performed by a network resource, such as an LCS manager, for authenticating applications. In block 401, a request is received for location information from an application adapted to provide location-aware services to a wireless device. The request may be by an application that is recognized by the network resource as possibly authenticated to receive the location information or by a application that is not recognized as authenticated. If the application is not recognized (for example, if its *appid* is not known by the network resource), then a notification of a failure of the request may be sent to the application before verification is begun in block 402, as illustrated my messages 102 and 103 of FIGURE 1. If the application has been authenticated, then verification begins in block 402.

In block 402, it is verified that a user has given permission to the application to request the location information. If the application is not recognized as authenticated, then the verification may be performed by sending a challenge key to the user and prompting the user to enter the key to give the permission to the application, as is illustrated by message 105 of FIGURE 1. Once the user enters the challenge key, the application may send another request, as in message 108. If the application is recognized as possibly authenticated, then the network resource may begin challenging the application, as is illustrated by signal 109 of FIGURE 1. Verification occurs after message 110, when the MD5 hash is decrypted, and the parameters are determined to match those sent to the application, as described above.

In block 403, the application is authorized to receive the location information. Before the application may be authorized, the MD5 hash must be decrypted, and the parameters, including the application key, must match those sent to the application. This is illustrated by messages 106, 109, and 110 of FIGURE 1. In many embodiments, the same MD5 hash that contained the challenge key also contains the application key. Some embodiments may employ a certificate with a private key, such that the network resource receives a PKI encryption of the challenge string from the application, decrypts the encryption, and determines that the PKI encryption contains the challenge string as sent to the application. Such an embodiment may be illustrated by messages 303-305 of FIGURE 3. Once the application is authenticated, it is authorized to receive location information. The network resource may then redirect the application to the positioning server, as illustrated by message 111 of FIGURE 1.

FIGURE 5 is a block diagram illustrating example method 500, according to various embodiments, that may be performed by an LCS agent or trusted framework, for authenticating applications. In block 501, user location information is requested from a network resource. If the application is not recognized as possibly authenticated, then a notification may be received that the request failed, as illustrated by messages 102 and 103 of FIGURE 1. If the application is recognized as possibly authenticated, then the request is similar to message 109.

In block 502, the user is prompted for permission to request the location information. The prompting may include prompting the user to enter a challenge key. The user may be prompted to manually type in an alphanumeric string, or simply may be prompted to click on an "OK" button to verify that permission is granted. Any kind of prompting may be within the scope of the embodiments. The prompting may also include receiving a challenge string, encrypting the challenge string and challenge key in a hash, and sending the hash to a network resource, as illustrated by messages 109 and 110 of FIGURE 1.

In block 503, the application is authorized to receive the location information. The authorizing may include encrypting an application key and challenge string in a hash, sending the hash to a network resource, and receiving a network address for a positioning server, as illustrated by messages 110 and 111 of FIGURE 1. Once again, the application key, challenge string, and challenge key may be encrypted in the same has. Once the application receives the network address of the positioning server, it may begin to receive location information.

In an embodiment wherein a trusted framework and certificate are employed, the framework may prompt the user for permission, and once permission has been granted, the requesting includes creating a message with the permission and a request for the information and signing the message with a private key associated with a certificate, as illustrated by message 302 of FIGURE 3. In such an embodiment, the action of block 502 is performed before the action of block 501. In that embodiment, the authorizing may include receiving a challenge string and generating a PKI of the challenge string, as illustrated by messages 303 and 304 of FIGURE 3.

When implemented via computer-executable instructions, various elements of embodiments of the present invention are in essence the code defining the operations of such various elements. The executable instructions or code may be obtained from a readable medium (e.g., a hard drive media, optical media, EPROM, EEPROM, tape media, cartridge media, flash memory, ROM, memory stick, and/or the like) or communicated via a data signal from a communication medium (e.g., a wireless network or the Internet). The code may be executed by any of a wide variety of processor-based devices. For example, any suitable processor-based device may be utilized, including without limitation PDAs, cell phones, handheld email devices, personal computers, laptop computers, computer workstations, and multi-processor servers. However, in many embodiments, the DNS server, LCS manager, and positioning server may be larger devices, while the handheld devices may be small devices, such that practical considerations may make some devices more suitable for some code. Moreover, embodiments of the present invention may be implemented on application specific integrated circuits (ASICs) or very large scale integrated (VLSI) circuits. In fact, persons of ordinary skill in the art may utilize any number of suitable structures capable of executing logical operations according to the embodiments of the present invention.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for verifying an application's authorization to receive position information, comprising:
sending a challenge key to a device on which an application is running;
sending an application key to the application;
sending a challenge string to the application;
receiving an encrypted hash of the challenge key, application key and challenge string from the application;
verifying that the encrypted hash is an expected value; and
sending positioning server information to the application.

2. The method of claim 1 further comprising:
receiving a request for position information from the application; and
determining that the application has not yet been approved to receive the requested position information.

3. The method of claim 1 wherein the hash is an MD5 hash.

4. The method of claim 1 wherein sending positioning server information to the application comprises sending a message to the application that contains an IP address of the positioning server.

5. A computer program product having a computer readable medium having computer program logic recorded thereon for providing services to a wireless device, comprising:
code for receiving a request for location information from an application adapted to provide location-aware services to the wireless device;
code for verifying that a user has given permission to the application to request the location information; and
code for authorizing the application to receive the location information.

6. The computer program product of claim 5 wherein the code for receiving comprises code for determining that the application has not yet been authorized to receive the location information.

7. The computer program product of claim 5 wherein the code for verifying comprises:
code for sending a challenge key to the wireless device;
code for sending a challenge string to the application;
code for receiving an encrypted hash of the challenge key and challenge string from the application; and
code for verifying that the encrypted hash is an expected value.

8. The computer program product of claim 5 wherein the code for authorizing comprises:
code for sending an application key to the application;
code for sending a challenge string to the application;
code for receiving an encrypted hash of the application key and challenge string from the application;
code for verifying that the encrypted hash is an expected value; and
code for sending positioning server information to the application.

9. The computer program product of claim 5 wherein the wireless device is selected from the group consisting of:
a mobile telephone;
a Personal Digital Assistant;
a handheld email device; and
a laptop computer.

10. The computer program product of claim 5 wherein code for receiving, code for verifying, and code for authorizing are one or more computer programs included in a location services manager.

11. The computer program product of claim 10 wherein the location services manager runs on a server computer.

12. The computer program product of claim 5 wherein the code for verifying comprises a trusted framework adapted to prompt a user for permission to request the location information.

13. The computer program product of claim 5 wherein the code for authorizing comprises:
code for sending a challenge string to the application;
code for receiving a Public Key Infrastructure (PKI) encryption of the challenge string from the application;
code for decrypting the PKI encryption; and
code for determining that the decrypted encryption contains the challenge string.

14. The computer program product of claim 5 further comprising:
code for interrogating a network operator's system to map an IP address of the wireless device to a Mobile Subscriber Integrated Services Digital Network (MSISDN) associated with the wireless device; and
code for determining that the MSISDN is the same for one or more subsequent requests for user location information.

15. A computer program product having a computer readable medium having computer program logic recorded thereon for providing services to a wireless device, comprising:
code for requesting user location information from a network resource;
code for prompting a user for permission to request the location information; and
code for authorizing an application, operable to provide location-aware services to the wireless device, to receive the location information.

16. The computer program product of claim 15 wherein the code for requesting comprises:
code for sending a request for the user location information to a location services manager and;
code for receiving notification that the user location information request failed.

17. The computer program product of claim 15 wherein the code for requesting comprises code for sending an application name and an application identifier to an LCS manager.

18. The computer program product of claim 15 wherein the code for prompting comprises:
code for prompting the user to enter a challenge key that was sent by a network resource; code for receiving a challenge string from the network resource;
code for creating an encrypted hash of the challenge key and challenge string; and
code for sending the encrypted hash to the network resource.

19. The computer program product of claim 15 wherein the code for authorizing comprises:
code for creating an encrypted hash of an application key and challenge string;
code for sending the encrypted hash to a network resource; and
code for receiving a network address for a positioning server from the network resource.

20. The computer program product of claim 15 wherein the code for requesting, code for prompting, and code for authorizing comprises one or more programs running on a wireless device.

21. The computer program product of claim 15 wherein the one or more programs comprise a location services agent.

22. The computer program product of claim 15 wherein the code for requesting, code for prompting, and code for authorizing comprises a trusted framework adapted to authorize one or more other applications operable to provide location-aware services to a wireless device.

23. The computer program product of claim 22 wherein the code for requesting comprises:
code for creating a message which includes permission from a user and a request for location information; and
code for signing the message with a private key associated with a certificate.

24. The computer program product of claim 22 wherein the code for authorizing comprises:
code for receiving a challenge string; and
code for generating a PKI of the challenge string.

25. The computer program product of claim 22 wherein the trusted framework is middleware adapted to communicate with the applications through use of an Application Programming Interface (API).

26. The computer program product of claim 22 wherein the trusted framework further comprises:
code for detecting that a first Subscriber Identity Module (SIM) associated with the wireless device has been replaced by a second SIM; and
code for erasing one or more stored keys not associated with the second SIM.

27. A method for approving an application's request for position information, comprising:
sending an application name and an application identifier to a location services manager;
prompting a user to enter a challenge key that was sent by the location services manager;
receiving an application key from the location services manager;
receiving a challenge string from the location services manager;
creating an encrypted hash of the challenge key, application key and challenge string;
sending the encrypted hash to the location services manager; and
receiving a positioning server address from the location services manager.

28. The method of claim 27 further comprising:
sending a request for position information to a location services manager; and
receiving notification that the position information request failed.

29. The method of claim 27 further including contacting a DNS server to request an IP address of the location services manager.

30. The method of claim 27 wherein the application is running on a wireless device.
